# FASCICULE DE BREVET EUROPEEN

(11) **EP 3 784 641 B1**
(45) Date de publication et mention de la délivrance du brevet: **27.11.2024**
(21) Numéro de dépôt: 19723331.5
(22) Date de dépôt: 24.04.2019
(51) Int. Cl.: C05D 9/00, C05F 9/00

(54) **PROCÉDÉ DE TRAITEMENT D'UNE MASSE DE DÉCHETS**
VERFAHREN ZUR BEHANDLUNG EINER ABFALLMASSE
METHOD FOR TREATING A MASS OF WASTE

(30) Priorité: 27.04.2018 LU 100779
(43) Date de publication de la demande: 03.03.2021
(73) Titulaire: BIOSYSTEM, 2449 Luxembourg (LU)
(72) Inventeur: Bonamy, Gilles, 2559 Luxembourg (LU)
(74) Mandataire: Cabinet Célanie
(86) Numéro de dépôt international: PCT/EP2019/060453
(87) Numéro de publication internationale: WO 2019/206955

(56) Documents cités:
- WO-A1-2017/049315
- WO-A1-90/03958
- DE-A1- 102006 033 205
- DE-A1- 19 651 955
- DE-C1- 3 640 785

## Description

Le secteur technique de la présente invention est celui du traitement des déchets divers tels les déchets ménagés.

Il est connu dans le domaine du traitement des déchets des machines destinées à sécher, broyer, presser, cisailler, cribler les matières afin d'en faire le tri, réduire le volume afin de les diriger vers une filière de recyclage, d'épandage ou autre.

Les problèmes rencontrés sont généralement les suivants :
- Effets limités sur la séparation nette de la fraction organique et inorganique
- Absence d'efficacité sur l'adhérence des matières organiques sur les plastiques, bois, métaux et autres
- Absence d'effets sur les mauvaises odeurs
- Procédés longs et complexes
- Absence d'effets sur la toxicité des métaux lourds

On comprend donc que la destination des produits sortants est incertaine. En effet, le tri n'est pas suffisamment performant et sélectif notamment par les adhérences résiduelles entre l'organique et l'inorganique et/ou la présence des métaux lourds pour permettre d'orienter les différents matériaux vers leurs filières respectives (bois, plastiques, métaux, compostage, épandage, méthanisation...). Par ailleurs, les odeurs pestilentielles constituent un handicap dans toutes les phases de maniement des déchets.

Par exemple, moins du tiers des déchets plastiques sont aujourd'hui recyclés.

De surcroît, les machines existantes n'offrent que peu d'adaptabilité pour traiter efficacement des déchets d'origines diverses, tels par exemple les déchets alimentaires, les emballages, les déchets industriels, les boues d'épuration, de curage et de dragage, les déchets animaliers, les déchets ménagers, les terres.

Le but de l'invention est de fournir un procédé de traitement utilisant un système de mélange de qualité élevée des déchets de types « ordures ménagères » mais aussi de tous types de déchets, résidus, boues, liquides ou solides en associant ces déchets avec des complexes minéraux. Ces complexes sont sélectionnés pour leurs caractéristiques physico-chimiques, en vue de séparer, et/ou désodoriser, déshydrater, épurer, adsorber la fraction organique solide, liquide ou volatile, de confiner les métaux et ainsi de permettre un pré-tri de la matière organique et l'inorganique et d'autoriser ou de faciliter le criblage, le transport, stockage, épandage, recyclage respectifs des différents composés. De tels complexes sont divulgués par WO 90/03958 A1. Ces complexes sont utilisés dans une composition régénératrice de sol.

Le système est piloté par des sondes et géré informatiquement.

L'invention a donc pour objet un procédé de traitement d'une masse de déchets à traiter en vue de séparer les matières organiques des autres matières, caractérisé en ce qu'on introduit dans un réacteur lesdits déchets additionnés d'un ou plusieurs complexes minéraux présentant une granulométrie comprise entre 100 nm et 16 mm, une stabilité thermique supérieure à 150 °C, une stabilité chimique insensible au pH, une dureté Mohs supérieure à 3 et une capacité d'échange élevée, supérieure à 2,50 meq/ g; les dits déchets additionnés d'un ou plusieurs complexes minéraux sont ensuite brassés.

Selon une caractéristique de l'invention, les complexes minéraux sont choisis dans le groupe constitué par les zéolithes, les argiles et les carbonates et plus spécifiquement les clinoptilolites, les lithothamnium, les chabazites, ou les bentonites.

Selon une autre caractéristique de l'invention, les complexes minéraux sont rajoutés selon une quantité de 5 à 20% du volume de déchets.

Selon encore une autre caractéristique de l'invention, lesdits déchets sont broyés avant mélange avec les complexes minéraux.

Selon encore une autre caractéristique de l'invention, on prévoit des sondes de mesure du taux d'hygrométrie, du potentiel redox, du pH, de la conductivité, et de la température de la masse de déchets.

Selon encore une autre caractéristique de l'invention, un complexe minéral est constitué par un mélange de clinoptilolite, chabazite, de lithothamnium dans des proportions respectives 70/20/10.

L'avantage essentiel de l'invention repose sur l'activité remarquable des complexes minéraux additionnés à la masse des déchets permettant un traitement complet de ceux-ci.

Un autre avantage du procédé selon l'invention réside dans l'agglomération des déchets organiques autour des complexes minéraux.

D'autres caractéristiques, détails et avantages de l'invention seront mieux compris à la lecture du complément de description qui va suivre.

Le principe de l'invention consiste en un procédé mettant en oeuvre le réacteur d'une machine de traitement des déchets capable de séparer, et/ou désodoriser, déshydrater, épurer, adsorber efficacement des déchets organiques et inorganiques contenant ou pas des métaux lourds, et ce, pour tous types de matières.

Pour plus de précision, on peut se reporter au brevet LU-93118 qui décrit une machine de traitement des déchets et qui peut être utilisée dans la mise en oeuvre du procédé selon l'invention. Pour mettre en oeuvre le procédé selon l'invention, il suffira de prévoir l'introduction des déchets avec ou sans broyage préalable dans la machine décrite dans ce brevet luxembourgeois.

Le matériau sortant de la machine doit, après traitement, respecter les critères physiques, physico-chimiques et biologiques, permettant un recyclage vers une filière. L'exigence du tri sélectif nécessite obligatoirement une bonne séparation physique des différents éléments à trier, le traitement des odeurs et une épuration au moins partielle des métaux lourds.

En effet, quelle que soit la filière de recyclage ou d'évacuation (plastiques, métaux, compostage, méthanisation, verre, épandage...) il est indispensable que les matières organiques et inorganiques soient proprement séparées, que les mauvaises odeurs soient réduites et que les concentrations en métaux lourds répondent à des normes. La possibilité même du recyclage ou de l'évacuation des déchets est dépendante de ces facteurs et la qualité du recyclage en dépend également.

Ainsi et à titre d'exemple, des emballages et/ou résidus plastiques souillés par de la matière organique interdisent ou au moins affectent la qualité du recyclage de la matière plastique d'un côté et de la méthanisation, du compostage, de l'épandage, de l'évacuation de la fraction organique de l'autre. Il est donc indispensable de séparer la matière organique des matières plastiques.

L'ensemble des équipements de la machine décrite dans le brevet luxembourgeois précité mettant en oeuvre le procédé est géré par un système informatique afin d'agir en continu pendant le cycle de traitement et de permettre d'obtenir les paramètres permettant de répondre aux exigences susvisées. Ces équipements comprennent les éléments suivants.

Le rotor doit être interchangeable pour pouvoir le remplacer selon les nécessités du type de déchets à traiter et son sens de rotation alternatif est réglé selon le type de déchets et au cours des cycles pour permettre le brassage optimum entre le complexe minéral et les déchets.

Les périodes de fonctionnement et d'arrêt alternatives du réacteur doivent être réglées selon le type de déchets et pendant le déroulement des cycles de traitement pour permettre le brassage optimum entre le complexe minéral et les déchets.

Le compteur de vitesse du réacteur doit permettre de moduler la rotation du rotor selon le type de déchets et au cours des cycles pour permettre le brassage optimum entre le complexe minéral et les déchets.

Les sondes rétractables du réacteur sont par exemple des sondes de mesure de la température, de l'hygrométrie, pour assurer un séchage par évaporation progressive déterminant pour une bonne adsorption des composés organiques par le complexe minéral tout au long du cycle de traitement, du pH, de la conductivité, du potentiel redox, pour contrôler les phénomènes d'acidification et de fermentation, nuisibles à la stabilité du produit sortant. Le monitorage informatique de ces données permet de modifier les caractéristiques des cycles de traitement des déchets, leur durée, le sens de rotation et la vitesse du rotor, la température, l'extraction d'air et d'ajuster également les quantités et types de minéraux selon le type de déchets et au cours des cycles.

Le réacteur doit être muni de moyens d'extraction et de filtration de l'air, pour sécher la matière efficacement et de manière progressive et de limiter fortement les odeurs.

Le réacteur doit permettre le pesage pour surveiller l'évolution au cours des cycles et la masse entrant et sortant.

Enfin, la machine peut être équipée d'un broyeur pour réduire le volume des déchets. Le broyeur n'est pas indispensable mais, si la machine en est équipée, il doit pouvoir admettre dans la machine tous types de déchets et permettre un brassage optimal et un contact homogène déchets/complexe minéral.

Ces particularités indiquées ci-dessus sont couplées aux caractéristiques physico-chimiques des complexes de minéraux utilisés par une action de répartition contrôlée de ces matières minérales actives finement divisées au sein de la masse de déchets à traiter de manière pertinente selon la nature de ces déchets à traiter.

La granulométrie des complexes minéraux s'étend de 100 nm à 16 mm pour permettant de profiter des états de surface liés à la texture de leurs grains, définissant une macro et une méso-porosité, des états massifs liés à la structure cristallographique des complexes minéraux, définissant la microporosité inter-planaire ou tridimensionnelle.

La stabilité thermique élevée permet le séchage sans altération des capacités abrasives et d'adsorption des matières organiques et volatiles par les minéraux.

La stabilité chimique élevée permet la conservation des qualités physico-chimiques des minéraux, même à pH acide ou basique et éventuellement de le rectifier.

La stabilité mécanique (dureté de Mohs et friabilité) permet une bonne abrasion et un bon décollement des matières organiques.

La capacité d'échange globale élevée, la capacité d'adsorption moléculaire et volume poral élevés, par exemple 30% minimum du poids sec et 39% maximum, permettent parallèlement à l'abrasion, l'adsorption des composés organiques et des mauvaises odeurs ainsi que le confinement de certains métaux.

L'offre des surfaces d'échange et d'adsorption avec les déchets à traiter est élevée, par exemple 400 m²/g minimum.

Cette offre, selon les besoins de traitement, permet une sélectivité moléculaire naturelle dépendante du cation en position d'échange (exemple ordre décroissant : H₂O » NH₃ > SO₂ > H₂S > CO₂ > CH₄, etc.)

Le procédé selon l'invention permet la neutralisation des métaux lourds par l'échange cationique et par l'adsorption moléculaire. Les minéraux vont collecter les métaux lourds, surtout divalents, présents dans les déchets. Ainsi collectés, ces métaux vont rester immobilisés sur les sites d'échanges minéraux. Les complexes minéraux peuvent retenir indéfiniment ces métaux à condition d'éviter des lavages acides et répétés. Pour désorber les complexes minéraux, l'utilisation par exemple de l'acide fluorhydrique ou de l'eau régale ne suffit pas.

Ainsi, l'invention permet de façon surprenante de séparer les matières organiques des matériaux souillés, puis d'agglomérer ces matières organiques autour des complexes minéraux et ainsi conduire un recyclage des déchets.

Les phénomènes d'échanges doivent être invoqués pour les métaux divalents Fe, Mn, Cd, Zn, Cu, Pb, Ni, ainsi que pour les formes trivalentes du chrome, de l'aluminium et du fer. En revanche, pour les valences supérieures du chrome, pour l'arsenic et pour les dérivés organiques de l'étain et du mercure, ce sont les procédures d'adsorption physique et/ou chimique, qui interviennent majoritairement.

Le procédé selon l'invention permet d'assurer un effet d'adsorption moléculaire sur des micropolluants tels que les pesticides, les herbicides et les fongicides (PHF) ou encore pour des composés organiques volatils (COV) avec atténuation des nuisances olfactives.

Par exemple, pour traiter des déchets ménagers, il sera utilisé préférentiellement un mélange de clinoptilolite, chabazite, de lithothamnium dans des proportions 70/20/10. Mais ce mélange doit être adapté initialement en fonction du déchet en fonction des résultats d'analyses physico-chimiques du déchet, puis par des indications fournies par les sondes pendant le premier cycle de traitement.

## Revendications

1. Procédé de traitement d'une masse de déchets à traiter comprenant des matériaux souillés par des déchets organiques et/ou des métaux lourds, ledit procédé comprenant les étapes suivantes :
- l'introduction dans un réacteur des dits déchets additionnés d'un ou plusieurs complexes minéraux présentant une granulométrie comprise entre 100 nm et 16 mm, une stabilité thermique supérieure à 150 °C, une stabilité chimique insensible au pH, une dureté Mohs supérieure à 3 et une capacité d'échange élevée, supérieure à 2,50 meq/g
- le brassage des dits déchets additionnés d'un ou plusieurs complexes minéraux,
ledit procédé permettant la séparation des matières organiques et/ou des métaux lourds des matériaux souillés, les matières organiques présentes dans les déchets étant agglomérées autour des complexes minéraux et les métaux lourds retenus par les minéraux.

2. Procédé de traitement selon la revendication 1, **caractérisé en ce que** les complexes minéraux sont choisis dans le groupe constitué par les zéolithes, les argiles et les carbonates et plus spécifiquement les clinoptilolites, les lithothamniums, les chabazites, ou les bentonites.

3. Procédé de traitement selon la revendication 2, **caractérisé en ce que** les complexes minéraux sont présents selon une quantité de 5 à 20% du volume de déchets.

4. Procédé de traitement selon l'une des revendications 1 à 3, comprenant une étape de broyage des déchets avant mélange avec les complexes minéraux.

5. Procédé de traitement selon l'une des revendications 1 à 4, comprenant le contrôle du taux d'hygrométrie, du potentiel redox, du pH, de la conductivité, et de la température de la masse de déchets.

6. Procédé de traitement selon l'une des revendications précédentes, **caractérisé en ce qu'**un complexe minéral est constitué par un mélange de clinoptilolite, chabazite, de lithothamnium dans des proportions respectives 70/20/10.

## Patentansprüche

1. Verfahren zur Behandlung einer zu behandelnden Abfallmasse, die durch organische Abfälle und/oder Schwermetalle verunreinigte Materialien umfasst, wobei das Verfahren die folgenden Schritte umfasst:
- das Einbringen in einen Reaktor der Abfälle, denen ein oder mehrere Mineralkomplexe zugesetzt werden, die eine Korngröße, die zwischen 100 nm und 16 mm liegt, eine thermische Stabilität von mehr als 150 °C, eine gegenüber pH unempfindliche chemische Stabilität, eine Mohs-Härte von mehr als 3 und eine erhöhte Austauschkapazität von mehr als 2,50 meq/g aufweisen
- das Vermischen der Abfälle, denen ein oder mehrere Mineralkomplexe zugesetzt sind,
wobei das Verfahren das Abscheiden der organischen Stoffe und/oder der Schwermetalle aus den verunreinigten Materialien ermöglicht, wobei die in den Abfällen vorhandenen organischen Stoffe um Mineralkomplexe und die von den Mineralien zurückgehaltenen Schwermetalle herum angehäuft sind.

2. Verfahren zur Behandlung nach Anspruch 1, **dadurch gekennzeichnet, dass** die Mineralkomplexe aus der Gruppe ausgewählt sind, die aus den Zeolithen, Lehmen, und Karbonaten und insbesondere den Klinoptilolithen, Lithothamnien, Chabasiten oder Bentoniten besteht.

3. Verfahren zur Behandlung nach Anspruch 2, **dadurch gekennzeichnet, dass** die Mineralkomplexe entsprechend einer Menge von 5 bis 20 Vol.-% an Abfällen vorhanden sind.

4. Verfahren zur Behandlung nach einem der Ansprüche 1 bis 3, umfassend einen Schritt zum Zerkleinern der Abfälle vor dem Mischen mit den Mineralkomplexen.

5. Verfahren zur Behandlung nach einem der Ansprüche 1 bis 4, umfassend die Kontrolle des Feuchtigkeitsgehalts, des Redoxpotentials, des pH-Werts, der Leitfähigkeit, und der Temperatur der Masse an Abfällen.

6. Verfahren zur Behandlung nach einem der vorstehenden Ansprüche, **dadurch gekennzeichnet, dass** ein Mineralkomplex aus einem Gemisch aus Klinoptilolith, Chabasit, Lithothamnium in jeweiligen Anteilen von 70/20/10 besteht.

## Claims

1. A method for processing a mass of wastes to be processed comprising matters soiled by organic wastes and/or heavy metals, said methods comprising the following steps:
- introducing into a reactor said wastes supplemented by one or more mineral complex(es) having a particle size comprised between 100 nm and 16 mm, a thermal stability higher than 150°C, a pH-insensitive chemical stability, a Mohs hardness higher than 3 and a high exchange capacity, higher than 2.50 meq/g,
- blending said wastes supplemented by one or more mineral complex(es) ,
said method enabling the separation of the organic matters and/or the heavy metals from the soiled matters, the organic matters present in the wastes being agglomerated around the mineral complexes and the heavy metals retained by the minerals.

2. The processing method according to claim 1, **characterised in that** the mineral complexes are selected from among zeolites, clays and carbonates and more specifically clinoptilolites, lithothamnia, chabazites, or bentonites.

3. The processing method according to claim 2, **characterised in that** the mineral complexes are present in an amount of 5 to 20% of the volume of wastes.

4. The processing method according to one of claims 1 to 3, comprising a step of grinding the wastes before mixing with the mineral complexes.

5. The processing method according to one of claims 1 to 4, comprising monitoring the hygrometry level, the redox potential, the pH, the conductivity, and the temperature of the mass of wastes.

6. The processing method according to one of the preceding claims, **characterised in that** a mineral complex consists of a mixture of clinoptilolite, chabazite, lithothamnium in respective proportions 70/20/10.
